Europäisches Patentamt

European Patent Office

Office européen des brevets

(19)

(11) Veröffentlichungsnummer : **0 101 577 B1**

(12) **EUROPÄISCHE PATENTSCHRIFT**

(45) Veröffentlichungstag der Patentschrift :
26.04.89

(21) Anmeldenummer : 83107457.0

(22) Anmeldetag : 28.07.83

(51) Int. Cl.⁴ : **H 04 L 27/14, H 04 L 7/02**

(54) Verfahren und Vorrichtung zur empfangsseitigen Rückgewinnung eines Taktsignals.

(30) Priorität : 03.08.82 DE 3228969

(43) Veröffentlichungstag der Anmeldung :
29.02.84 Patentblatt 84/09

(45) Bekanntmachung des Hinweises auf die Patenterteilung : 26.04.89 Patentblatt 89/17

(84) Benannte Vertragsstaaten :
AT CH DE FR GB LI NL

(56) Entgegenhaltungen :
US—A— 3 555 428
US—A— 3 656 064
US—A— 3 860 874
US—A— 3 876 833
FUNKSCHAU, Nr. 23, November 1980, Seiten 95,96,
München, DE; G. Christofzik: "Datenübertragung mit
Frequenzumtastung"

(73) Patentinhaber : **Siemens Aktiengesellschaft Berlin
und München
Wittelsbacherplatz 2
D-8000 München 2 (DE)**

(72) Erfinder : **Hammer, Gerhard, Dipl.-Ing.
Am Südhang 2
D-6729 Neupotz (DE)**

## Beschreibung

Die Erfindung bezieht sich auf ein Verfahren zur empfangsseitigen Rückgewinnung eines Taktsignals aus einem mit einem Datensignal beaufschlagten Empfangssignal bei einer Datenübertragung, bei dem das Taktsignal mittels Frequenzteilung aus dem Empfangssignal rückgewonnen wird und das Sendesignal durch binäre Frequenzmodulation (Frequenzumtastung) mit einem Datensignal moduliert ist.

Bei einem bekannten Verfahren dieser Art (US-A-3 555 428) werden, von einem Pulsgenerator gesteuert, eine Anzahl Frequenzgeneratoren über UND-Glieder zusammengeschaltet. Die Umschaltung zwischen den verschiedenen Frequenzen erfolgt in Abhängigkeit von einem Datensignal, das empfangsseitig durch entsprechende Demodulatoren und Taktrückgewinnungsbausteine wiedergewonnen wird.

Es ist weiterhin bereits bekannt, daß zur phasen- und frequenzgenauen Rückgewinnung des Taktsignals bei einer Datenübertragung das Taktsignal aus dem Empfangssignal zurückgewonnen wird (Hölzler/Holzwarth « Pulstechnik II », Springer-Verlag, Berlin — Heidelberg — New York, 1976, Seiten 262 bis 265). Hieraus ist weiterhin bekannt, daß das Taktsignal mittels schmalbandiger Filter aus dem Datensignal (demoduliertes Empfangssignal) zurückgewonnen werden kann. Diese Verfahren können sowohl bei sogenannten Basisband-Systemen als auch bei trägerfrequenten Systemen (mit Frequenzumtastung) angewendet werden. Es muß aber in jedem Fall sichergestellt sein, daß genügend Information zur Taktrückgewinnung im Datensignal enthalten ist. Dies ist z. B. nicht gewährleistet, wenn längere Null- oder Eins-Folgen im Datensignal auftreten. Beispielsweise kann man mit Hilfe eines Verwürflers längere Null- oder Eins-Folgen im gesendeten Datensignal zwar vermeiden, bei relativ kurzen Datentelegrammen kommt es jedoch zu Synchronisationsschwierigkeiten des hier notwendigen Entwürflers auf der Empfangsseite. Bei der Übertragung von relativ kurzen Datentelegrammen ist außerdem die Einschwingzeit der oben erwähnten schmalbandigen Filter von Nachteil.

Darüber hinaus gibt es noch die Möglichkeit, durch eine entsprechende Codierung des zu übertragenden Signals die Taktrückgewinnung auf der Empfangsseite zu erleichtern, was jedoch zu einer Reduktion der Übertragungsgeschwindigkeiten bzw. einer Vergrößerung der erforderlichen Bandbreite des Signals bis um den Faktor 2 führt.

Der Erfindung liegt die Aufgabe zugrunde, ein Verfahren zur empfangsseitigen Rückgewinnung eines Taktsignals zu schaffen, bei dem bei einer Modulation des Sendesignals mittels Frequenzumtastung mit einfachen Mitteln eine hinreichend genaue Rückgewinnung von Taktfrequenz und Taktphase auf der Empfangsseite möglich ist.

Zur Lösung dieser Aufgabe ist es bei einem Verfahren der eingangs angegebenen Art vorteilhaft, daß das Empfangssignal demoduliert wird und das somit wiedergewonnene Datensignal ein Steuersignal darstellt, mit dem ein veränderbarer Teilerfaktor bei der Frequenzteilung einstellbar ist.

Die Erfindung macht sich in vorteilhafter Weise die Erkenntnis zunutze, daß bei einer Modulation mittels Frequenzumtastung sowohl Frequenz als auch Phase des Schrittaktes der Frequenzumtastung auch im modulierten Trägersignal empfangsseitig enthalten sind, wenn das Trägersignal durch Vervielfachen und Teilen aus dem Taktsignal selber gewonnen wird.

Eine besonders einfache Erzeugung des Taktsignals auf der Sendeseite ist ermöglicht, wenn zur Rückgewinnung des Taktsignals aus den Nulldurchgängen des Empfangssignals ein Binärsignal erzeugt wird, das Binärsignal zeitverzögert wird und das verzögerte Binärsignal mit einem vom Steuersignal abhängigen Teilerfaktor in seiner Frequenz geteilt wird, wobei dieses Signal das Taktsignal darstellt. Bei der weiteren Verarbeitung des Taktsignals ist es vorteilhaft, wenn aus den negativen Flanken des Taktsignals Taktimpulse gewonnen werden. Desweiteren kann das erfindungsgemäße Verfahren auch mit den in den Unteransprüchen 4 oder 5 angegebenen Merkmalen vorteilhaft durchgeführt werden.

Zur Durchführung des erfindungsgemäßen Verfahrens weist eine Vorrichtung einen Demodulator auf, an dessen Eingang das Empfangssignal und an dessen Ausgang das Steuersignal anliegt ; ein Taktrückgewinnungsbaustein ist vorhanden, an dessen einem Eingang das Empfangssignal, an dessen zweitem Eingang das Steuersignal anliegt und der an seinem Ausgang Taktimpulse abgibt.

Der Taktrückgewinnungsbaustein ist zur Auswertung der Nulldurchgänge des übertragenen Datensignals in vorteilhafter Weise so aufgebaut, daß er einen Nulldurchgangsdiskriminator aufweist, dessen Eingang der Eingang des Bausteins ist und dessen Ausgang über eine Verzögerungsleitung auf den Eingang eines umschaltbaren Frequenzteilers geführt ist, der zweite Eingang des Taktrückgewinnungsbausteins mit einem Schalteingang des Frequenzteilers verbunden ist und daß eine monostabile Kippstufe an den Ausgang des Frequenzteilers geschaltet ist, wobei der Ausgang der Kippstufe den Ausgang des Taktrückgewinnungsbausteins darstellt.

Andere vorteilhafte Ausführungsformen der erfindungsgemäßen Vorrichtung sind mit den weiteren Unteransprüchen angegeben.

Die Erfindung wird anhand der Figuren erläutert, wobei

Figur 1 ein Blockschaltbild eines Ausführungsbeispiels der Vorrichtung zur Durchführung des erfindungsgemäßen Verfahrens,

Figur 2 ein Impulsdiagramm der in der Vorrichtung nach Figur 1 auftretenden Signale,

Figur 3 das Ausführungsbeispiel der Vorrichtung nach Figur 1 mit einem detailliert gezeigten Demodulator und

Figur 4 ein Prinzipschaltbild des Taktrückgewinnungsbausteins der beschriebenen Vorrichtung darstellt.

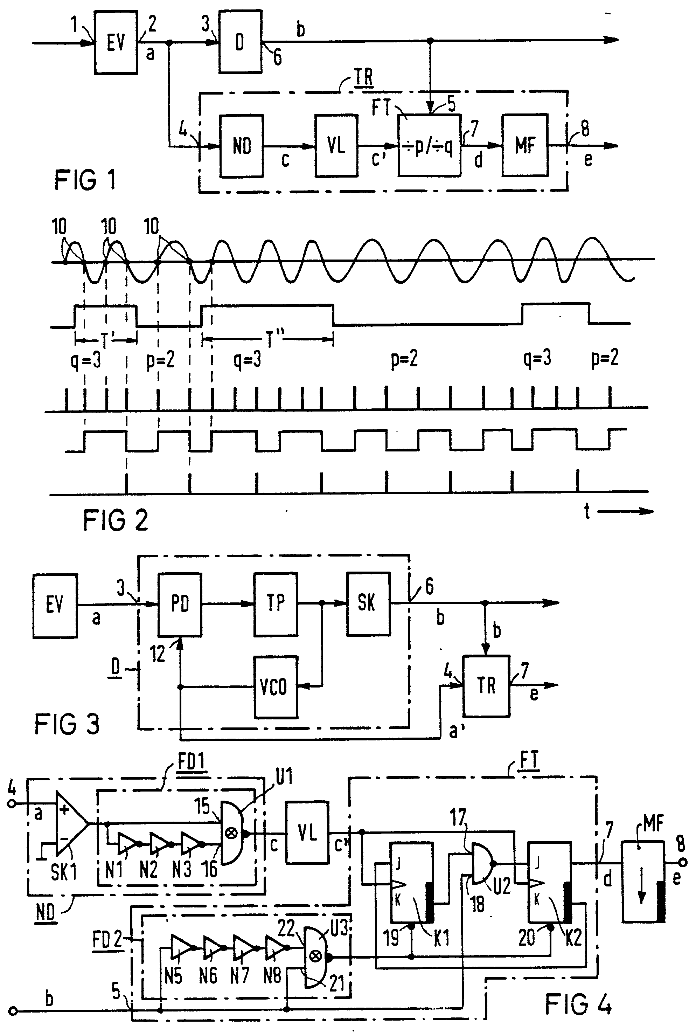

Bei der Anordnung nach der Figur 1 liegt am Eingang 1 eines Eingangsverstärkers EV ein von einer nicht dargestellten Datenübertragungseinrichtung empfangenes Signal an. Ein Signal a am Ausgang 2 des Eingangsverstärkers EV, der eventuell auch einen Entzerrer enthalten kann, wird auf den Eingang 3 einer Demodulatorschaltung D und auf den Eingang 4 eines Taktrückgewinnungsbausteins TR geführt. Der Taktrückgewinnungsbaustein TR enthält einen Nulldurchgangsdiskriminator ND, an dessen Ausgang ein Signal c' ansteht, eine Verzögerungsleitung VL, an deren Ausgang ein Signal c' anliegt, und einen umschaltbaren Frequenzteiler FT, der an seinem Ausgang ein Taktsignal d abgibt. An einen Steuereingang 5 ist ein Steuersignal b vom Ausgang 6 der Demodulatorschaltung D geführt. Das Taktsignal d der Frequenzteilerschaltung FT ist über eine monostabile Kippschaltung MF auf den Ausgang 7 des Taktrückgewinnungsbausteins TR geführt, an dessen Ausgang somit Taktimpulse e abgenommen werden können.

Zur Erläuterung der Funktionsweise des Ausführungsbeispiels nach der Figur 1 ist gleichzeitig auf die Impulsdiagramme nach der Figur 2 zu verweisen, in denen die Signale a bis e des oben beschriebenen Ausführungsbeispiels über der Zeit t dargestellt sind. Das Signal a am Ausgang des Eingangsverstärkers EV stellt ein frequenzmoduliertes Trägersignal dar, dessen Frequenz mit einer binären Zeichenfolge (Datensignal) hart umgetastet (moduliert) ist. Im Diagramm zu Signal a sind hier die Nulldurchgänge 10, die für die weitere Auswertung herangezogen werden, gekennzeichnet. Nach der Demodulation mit dem in bekannter Weise (beispielsweise als Ringdemodulator) aufgebauten Demodulator D ergibt sich das Steuersignal b als binäre Zeichenfolge, die das zu übertragende Datensignal darstellt und die zur Umschaltung des veränderbaren Frequenzteilers FT herangezogen wird.

Bei der sendeseitigen Modulation des trägerfrequenten Signals ist hierbei so verfahren worden, daß die Anzahl der während einer Zeichenlänge T', T'' usw. (vergleiche Diagramm zu Steuersignal b in Figur 2) erzeugten Halbperioden des trägerfrequenten Signals (entsprechend Signal a in Figur 2) jeweils ganzzahlig ist.

Die Nulldurchgänge 10 des trägerfrequenten Signals a werden mit dem Nulldurchgangsdiskriminator ND erfaßt und mit einer Verzögerungsleitung VL in dem Maße zeitverzögert, in dem der Demodulator D eine Zeitverzögerung hervorruft, so daß am Ausgang der Verzögerungsleitung VL ein Signal c' in der dargestellten Form ansteht. Das Steuersignal b (Datensignal) steuert den umschaltbaren Frequenzteiler FT derart, daß beispielsweise bei einer binären « 1 » des Signals b der Frequenzteiler FT um den Faktor $q = 3$ teilt und bei einer binären « 0' » des Signals e um einen Faktor $p = 2$ teilt. Es ergibt sich somit das Signal d, bei dem während der Zeit einer binären « 1 » des Signals b drei Impulse zur Bildung eines Impulses herangezogen werden und während der Zeiten einer binären « 0 » zwei Impulse zur Bildung eines Impulses herangezogen werden.

Das Signal e, das am Ausgang des Taktrückgewinnungsbausteins TR ansteht, enthält Impulse, die den negativen Flanken des Signals d entsprechen und die in Taktfrequenz und Taktphase dem ursprünglichen Taktsignal bei der Datenübertragung entsprechen.

Figur 3 zeigt ein Ausführungsbeispiel, bei dem die Demodulatorschaltung D als Phasenregelkreis (PLL-Demodulator) aufgebaut ist ; Bausteine, die mit denen der Figur 1 übereinstimmen, sind mit gleichen Bezugszeichen versehen.

Bei dem hier dargestellten Demodulator D liegt an einem Eingang 11 eines Phasendiskriminators PD das trägerfrequente Signal a an, an einem Eingang 12 liegt das Ausgangssignal eines spannungsgesteuerten Oszillators VCO an. Das Ausgangssignal des Phasendiskriminators PD wird über einen Tiefpaß TP einem Spannungskomparator SK zugeführt. Das Ausgangssignal des Tiefpasses TP dient als Steuergröße für die Frequenz des spannungsgesteuerten Oszillators VCO, so daß in diesem beschriebenen Regelkreis eine Nachregelung der Phase erfolgt und aus der Steuergröße für den steuerbaren Oszillator VCO das Steuersignal b mittels des Spannungskomparators SK erzeugbar ist. Das Steuersignal b, das auch hier aus einer binären Zeichenfolge besteht, wird in der oben beschriebenen Art und Weise weiterverarbeitet. Der Unterschied zu dem in der Figur 1 beschriebenen Ausführungsbeispiel besteht darin, daß hier die Nulldurchgänge des Referenzsignals (Signal am Eingang 12) und nicht die des Signals a ausgewertet werden.

In der Figur 4 ist eine Detaildarstellung eines Ausführungsbeispiels des Rückgewinnungsbausteins TR gezeigt, an dessen Eingängen 4 und 5 die Signale a und b in der anhand der Figuren 1 und 2 erläuterten Form anliegen. Der Nulldurchgangsdiskriminator ND weist als Eingangsstufe einen als Spannungskomparator SK1 aufgebauten Operationsverstärker auf, an dessen positiven Eingang der Wechselspannungsanteil des trägerfrequenten Signals a geführt ist ; der negative Eingang ist nach Masse gelegt. Der Ausgang des Spannungskomparators SK1 ist mit dem Eingang eines Flankendiskriminators FD1 verbunden, der ein EXKLUSIV-ODER-Gatter U1 enthält. Am ersten Eingang 15 des EXKLUSIV-ODER-Gatters U1 liegt direkt das Ausgangssignal des Spannungskomparators SK1 und am zweiten Eingang 16 das über drei Negationsglieder N1 ... N3 geführte Ausgangssignal des Spannungskomparators SK1 an. Der negierte Ausgang des EXKLUSIV-ODER-Gatters U1 stellt den Ausgang des Nulldurchgangsdiskriminators ND dar. Der Ausgang des Nulldurchgangsdiskriminators ND ist, wie auch bei den oben beschriebenen Ausführungsbeispielen, über eine Verzögerungsleitung VL auf den Eingang des umschaltbaren Frequenzteilers FT und hier jeweils auf die Takteingänge von JK-Kippstufen K1 und K2 geführt. Der negierte Ausgang der Kippstufe K1 ist auf einen ersten Eingang 17 eines UND-Gatters U2 geführt, wobei der zweite Eingang 18 des UND-Gatters U2 mit dem am Steuereingang 5 anliegenden Steuersignal b beaufschlagt ist. Der negierte Ausgang des UND-Gatters U2 ist auf den Eingang J der zweiten Kippstufe K2 geführt, deren nicht negierter Ausgang den Ausgang des Frequenzteilers FT darstellt. Der negierte Ausgang der zweiten Kippstufe K2 ist auf den Eingang J der ersten Kippstufe K1 zurückgeführt.

Auf Rücksetzeingänge 19 und 20 der Kippstufen K1 und K2 sind Ausgangsimpulse eines weiteren Flankendiskriminators FD2 geführt, der auch Bestandteil der Frequenzteilerschaltung FT ist. Der Flankendiskriminator FD2 enthält ein EXKLUSIV-ODER-Gatter U3, dessen erster Eingang 21 direkt mit dem Steuersignal b beaufschlagt ist und dessen zweiter Eingang 22 mit dem über vier Negationsglieder N5 ... N8 geführten Steuersignal b beaufschlagt ist.

Der Ausgang 7 der Frequenzteilerschaltung FT, an dem das Signal d anliegt, ist in gleicher Weise wie bei den vorher beschriebenen Ausführungsbeispielen über eine monostabile Kippstufe MF auf den Ausgang 8 des Taktrückgewinnungsbausteins TR geführt.

Zur Erläuterung der in der Figur 4 dargestellten Schaltung ist auch auf die in der Figur 2 dargestellten Impulsdiagramme zu verweisen. Das sinusförmige, trägerfrequente Signal a wird mittels des Spannungskomparators SK1 in ein Rechtecksignal umgeformt. Mit Hilfe des ersten Flankendiskriminators FD1 werden aus den Nulldurchgängen 10 dieses Signals a Nadelimpulse gewonnen, die in der Verzögerungsleitung VL um die Zeit verzögert werden, welche für die Demodulation in dem weiter oben beschriebenen Demodulator D benötigt wird. Das am Ausgang der Verzögerungsleitung VL vorliegende Signal c' wird dem umschaltbaren Frequenzteiler FT zugeführt, dessen Teilerfaktor p bzw. q abhängig vom Steuersignal b z. B. entweder 2 oder 3 beträgt, je nachdem, ob die Frequenz des trägerfrequenten Signals a gerade zweimal oder dreimal so groß ist wie die halbe Frequenz des Taktsignals (Nyquist-Frequenz). Am Ausgang 7 des Frequenzteilers FT steht dann das Taktsignal d zur Verfügung, dessen abfallende Flanken äquidistant sind, wobei mit der monostabilen Kippstufe MF jedes beliebige Tastverhältnis des Taktsignals zur Gewinnung von Taktimpulsen e eingestellt werden kann.

Der Flankendiskriminator FD2 liefert zu jedem Wechsel des Steuersignals b einen Rücksetzimpuls für die Kippstufen K1 und K2 und synchronisiert dadurch die mit dem Frequenzteiler FT abgeleiteten Taktsignale d mit dem Steuersignal b (Datensignal).

**Patentansprüche**

1. Verfahren zur empfangsseitigen Rückgewinnung eines Taktsignals aus einem mit einem Datensignal beaufschlagten Empfangssignal bei einer Datenübertragung, bei dem

a) das Taktsignal mittels Frequenzteilung aus dem Empfangssignal rückgewonnen wird,

b) das Sendesignal durch binäre Frequenzmodulation (Frequenzumtastung) mit einem Datensignal moduliert ist, dadurch gekennzeichnet, daß

c) das Empfangssignal (a) demoduliert wird und das somit wiedergewonnene Datensignal ein Steuersignal (b) darstellt, mit dem ein veränderbarer Teilerfaktor (p, q) bei der Frequenzteilung einstellbar ist.

2. Verfahren nach Anspruch 1, dadurch gekennzeichnet, daß

d) zur Rückgewinnung des Taktsignals (d) aus den Nulldurchgängen des Empfangssignals (a) ein Binärsignal (c) erzeugt wird,

e) das Binärsignal (c) phasenverzögert wird und

f) das phasenverzögerte Binärsignal (c') mit dem vom Steuersignal (b) abhängigen Teilerfaktor (p, q) in seiner Frequenz geteilt wird.

3. Verfahren nach Anspruch 2, dadurch gekennzeichnet, daß

g) aus den negativen Flanken des Taktsignals (d) Taktimpulse (e) gewonnen werden.

4. Verfahren nach einem der vorhergehenden Ansprüche, dadurch gekennzeichnet, daß

h) das Steuersignal (b) für die Zeit der durch die Frequenzumtastung erzeugten, relativ großen Frequenz eine binäre « 1 » aufweist und für die Zeit der relativ geringen Frequenz eine binäre « 0 » aufweist und

i) das Steuersignal (b) mit der binären « 0 » einen Teilerfaktor 2 und mit der binären « 1 » einen Teilerfaktor 3 erzeugt.

5. Verfahren nach einem der vorhergehenden Ansprüche, dadurch gekennzeichnet, daß

j) zur Synchronisierung der Frequenzteilung jeder Zustandswechsel des Steuersignals (b) zu einer Rücksetzung in den Anfangszustand bei der Frequenzteilung führt.

6. Vorrichtung zur Durchführung des Verfahrens nach einem der vorhergehenden Ansprüche, mit einem Demodulator (D) und einem Taktrückgewinnungsbaustein (TR), dadurch gekennzeichnet, daß

k) am Eingang des Demodulators (D) das Empfangssignal (a) und an dessen Ausgang das Steuersignal (b) anliegt,

l) am Eingang des Taktrückgewinnungsbausteins (TR) das Empfangssignal (a), an dessen zweitem Eingang das Steuersignal (b) anliegt und der an seinem Ausgang Taktimpulse (e) abgibt, wobei

m) der Taktrückgewinnungsbaustein (TR) einen Nulldurchgangsdiskriminator (ND) aufweist, dessen Eingang der Eingang des Bausteins (TR) ist und dessen Ausgang über eine Verzögerungsleitung (VL) auf den Eingang eines umschaltbaren Frequenzteilers (FT) mit veränderbarem Teilerfaktor geführt ist,

n) der zweite Eingang des Taktrückgewinnungsbausteins (TR) mit einem Schalteingang des Frequenzteilers (FT) verbunden ist und daß

o) eine monostabile Kippstufe (MF) an den Ausgang des Frequenzteilers (FT) geschaltet ist, wobei der Ausgang der Kippstufe (MF) den Ausgang des Taktrückgewinnungsbausteins (TR) darstellt.

7. Vorrichtung nach Anspruch 6, dadurch gekennzeichnet, daß

p) der Demodulator (D) als Phasenregelkreis ausgeführt ist, der

p1) einen Phasendiskriminator (PD) aufweist, an dessen einem Eingang das Empfangssignal (a) und an dessen zweitem Eingang das Ausgangssignal eines spannungsgesteuerten Oszillators (VCO) anliegt, bei dem

p2) der Ausgang des Phasendiskriminators (PD) über einen Tiefpaß (TP) auf den Eingang eines Spannungskomparators (SK) und auf den Steuereingang des spannungsgesteuerten Oszillators (VCO) geführt ist und bei dem

p3) das Ausgangssignal des Spannungskomparators (SK) das Steuersignal (b) darstellt.

8. Vorrichtung nach Anspruch 6 oder 7, dadurch gekennzeichnet, daß

q) dem Demodulator ein Eingangsverstärker (EV) vorgeschaltet ist.

9. Vorrichtung nach einem der Ansprüche 6 bis 8, dadurch gekennzeichnet, daß die Taktrückgewinnungsschaltung (TR) wie folgt aufgebaut ist :

r) der Nulldurchgangsdiskriminator (ND) weist als Eingangsstufe einen als Spannungskomparator (SK1) geschalteten Operationsverstärker auf, dessen Ausgang einerseits direkt auf einen Eingang eines EXKLUSIV-ODER-Gatters (U1) und andererseits über drei hintereinandergeschaltete Negationsglieder (N1 ... N3) auf einen zweiten Eingang des EXKLUSIV-ODER-Gatters (U1) geführt ist,

s) der negierte Ausgang des EXKLUSIV-ODER-Gatters (U1) ist über das Verzögerungsglied (VL) auf den einen Eingang des umschaltbaren Frequenzteilers (FT) geführt,

t) der Frequenzteiler (FT) enthält zwei JK-Kippstufen (K1, K2), an deren Takteingang jeweils das Ausgangssignal (c') der Verzögerungsleitung (VL) anliegt,

u) der negierte Ausgang der ersten Kippstufe (K1) ist an einen Eingang eines UND-Gatters (U2) angeschaltet, an dessen anderem Eingang das Steuersignal (b) anliegt, wobei der negierte Ausgang des UND-Gatters (U2) auf den Eingang (J2) der zweiten Kippstufe (K2) geführt ist,

v) der nicht negierte Ausgang der zweiten Kippstufe (K2) stellt den Ausgang der Taktrückgewinnungsschaltung (TR) dar, und der negierte Ausgang ist auf den Eingang (J1) der ersten Kippstufe (K1) geführt,

w) das Steuersignal (b) ist weiterhin direkt auf einen Eingang eines dritten EXKLUSIV-ODER-Gatters (U3) geführt und über vier hintereinandergeschaltete Negationsglieder (N5 ... N8) auf den anderen Eingang dieses EXKLUSIV-ODER-Gatters (U3), wobei der negierte Ausgang des EXKLUSIV-ODER-Gatters (U3) jeweils an einen Rücksetzeingang der JK-Kippstufen (K1, K2) geschaltet ist.

## Claims

1. Method for recovering on the receiving side a clock signal from a received signal, upon which a data signal acts, in the case of a data transfer, by which

a) the clock signal is recovered from the received signal by means of frequency division,

b) the transmitted signal is modulated with a data signal through binary frequency modulation (frequency shift keying), characterised in that

c) the received signal (a) is demodulated and the data signal thus regained represents a control signal (b) with which a variable divider factor (p, q) can be adjusted in the case of the frequency division.

2. Method according to claim 1, characterised in that

d) in order to recover the clock signal (d) from the zero passages of the received signal (a) a binary signal (c) is produced,

e) the binary signal (c) is phase-delayed and

f) the phase-delayed binary signal (c') is divided with the divider factor (p, q), dependent upon the control signal (b), in its frequency.

3. Method according to claim 2, characterised in that

g) clock pulses (e) are obtained from the negative edges of the clock signal (d).

4. Method according to one of the preceding claims, characterised in that

h) the control signal (b) for the time of the comparatively large frequency produced through the frequency shift keying has a binary « 1 » and for the time of the comparatively small frequency has a binary « 0 » and

i) the control signal (b) with the binary « 0 » produces a divider factor 2 and with the binary « 1 » produces a divider factor 3.

5. Method according to one of the preceding claims, characterised in that

j) in order to synchronize the frequency division each state change of the control signal (b) leads to a resetting to the initial state in the case of the frequency division.

6. Arrangement for carrying out the method according to one of the preceding claims, having a demodulator (D) and a clock recovery module (TR), characterised in that

k) the received signal (a) is applied at the input of the demodulator (D) and the control signal (b) is applied at the latter's output,

l) the received signal (a) [is applied] at the input of the clock recovery module (TR), at the second input of which the control signal (b) is applied and which emits at its output clock pulses (e), in which case

m) the clock recovery module (TR) has a zero passage discriminator (ND), the input of which is the input of the module (TR) and the output of which is led by way of a delay line (VL) to the input of a switchable frequency divider (FT) with variable divider factor,

n) the second input of the clock recovery module (TR) is connected with a switching input of the frequency divider (FT) and in that

o) a monostable flip-flop (MF) is connected to the output of the frequency divider (FT), the output of the flip-flop (MF) representing the output of the clock recovery module (TR).

7. Arrangement according to claim 6, characterised in that

p) the demodulator (D) is constructed as a phase-control loop which

p1) has a phase discriminator (PD), at the one input of which the received signal (a) is applied and at the second input of which the output signal of a voltage-controlled oscillator (VCO) is applied, in the case of which

p2) the output of the phase discriminator (PD) is led by way of a low pass (TP) to the input of a voltage comparator (SK) and to the control input of the voltage-controlled oscillator (VCO) and in the case of which

p3) the output signal of the voltage comparator (SK) represents the control signal (b).

8. Arrangement according to claim 6 or 7, characterised in that

q) an input amplifier (EV) is connected upstream of the demodulator.

9. Arrangement according to one of the claims 6 to 8, characterised in that the clock recovery circuit arrangement (TR) is built up as follows :

r) the zero passage discriminator (ND) has as an input stage an operational amplifier which is connected as a voltage comparator (SK1) and the output of which, on the one hand, is led directly to an input of an EXCLUSIVE-OR GATE (U1) and, on the other hand, is led by way of three series-connected negators (N1...N3) to a second input of the EXCLUSIVE-OR gate (U1),

s) the negated output of the EXCLUSIVE-OR gate (U1) is led by way of the delay element (VL) to the one input of the switchable frequency divider (FT),

t) the frequency divider (FT) contains two JK flip-flops (K1, K2), at the clock input of which there is applied, in each case, the output signal (c') of the delay line (VL),

u) the negated output of the first flip-flop (K1) is connected to one input of an AND-gate (U2), at the other input of which the control signal (b) is applied, the negated output of the AND-gate (U2) being led to the input (J2) of the second flip-flop (K2),

v) the non-negated output of the second flip-flop (K2) represents the output of the clock recovery circuit arrangement (TR) and the negated output is led to the input (J1) of the first flip-flop (K1),

w) the control signal (b) is, furthermore, led directly to an input of a third EXCLUSIVE-OR gate (U3) and by way of four series-connected negators (N5...N8) to the other input of this EXCLUSIVE-OR gate (U3), the negated output of the EXCLUSIVE-OR gate (U3) being connected, in each case, to a reset input of the JK flip-flops (K1, K2).

## Revendications

1. Procédé pour récupérer, côté réception, un signal de cadence à partir d'un signal de réception, chargé par un signal de données, lors d'une transmission de données, et selon lequel

a) on récupère le signal de cadence à partir du signal de réception au moyen d'une division de fréquence,

b) on module le signal d'émission avec un signal de données au moyen d'une modulation binaire de fréquence (manipulation de fréquence), caractérisé par le fait que

c) on démodule le signal de réception (a), et le signal de données ainsi récupéré constitue un signal de commande (b), à l'aide duquel on peut régler un facteur modifiable de division (p, k) lors d'une division de fréquence.

2. Procédé suivant la revendication 1, caractérisé par le fait que

d) pour la récupération du signal de cadence (d), on forme un signal binaire (c) à partir des annulations du signal de réception (a),

e) on retarde la phase du signal binaire (c), et

f) on divise la fréquence du signal binaire (c'), dont la phase est retardée, par le facteur de division (p, q), qui dépend du signal de commande (b).

3. Procédé suivant la revendication 2, caractérisé par le fait que

g) on récupère des impulsions de cadence (e) à partir des flancs négatifs du signal de cadence (d).

4. Procédé suivant l'une des revendications précédentes, caractérisé par le fait que

h) le signal de commande (b) possède un « 1 » binaire pendant l'intervalle de temps, pendant lequel la fréquence produite par la manipulation de fréquence est relativement élevée, et un « 0 » binaire pendant l'intervalle de temps, pendant lequel la fréquence est relativement faible, et

i) le signal de commande (b) produit, dans le cas du « 0 » binaire, un facteur de division égal à 2 et, dans le cas du « 1 » binaire, un facteur de division égal à 3.

5. Procédé suivant l'une des revendications précédentes, caractérisé par le fait que

j) pour synchroniser la division de fréquence, chaque changement d'état du signal de commande (b) conduit à un retour à l'état initial lors de la division de fréquence.

6. Dispositif pour la mise en œuvre du procédé suivant l'une des revendications précédentes, comportant un démodulateur (D) et un module (TR) de récupération de la cadence, caractérisé par le fait que

k) le signal de réception (a) est appliqué à l'entrée du démodulateur (D) et le signal de commande (b) est présent sur sa sortie,

l) le signal de réception (a) est appliqué à l'entrée du module (TR) de récupération de la cadence, le signal de commande (b) est appliqué à la seconde entrée de ce module, qui délivre des impulsions de cadence (a) sur sa sortie,

m) le module (TR) de récupération de la cadence possède un discriminateur d'annulations (ND), dont l'entrée constitue l'entrée du module (TR) et dont la sortie est reliée par l'intermédiaire d'une ligne à retard (VL) à l'entrée d'un diviseur de fréquence commutable (FT) possédant un facteur de division modifiable,

n) la seconde entrée du module (TR) de récupération de la cadence est raccordée à une entrée de commutation du diviseur de fréquence (FT), et

o) un étage à bascule monostable (MF) est raccordé à la sortie du diviseur de fréquence (FT), la sortie de l'étage à bascule (MF) représentant la sortie (TR) de récupération de la cadence.

7. Dispositif suivant la revendication 6, caractérisé par le fait que

p) le démodulateur (D) est réalisé sous la forme d'un circuit de régulation de phase qui

p1) possède un discriminateur de phase (PD), à une entrée duquel est présent le signal de réception (a) et à la seconde entrée duquel est présent le signal de sortie d'un oscillateur (VCO) commandé par la tension,

p2) la sortie du discriminateur de phase (PD) étant reliée par l'intermédiaire d'un filtre passe-bas (TP) à l'entrée d'un comparateur de tension (SK) et à l'entrée de commande de l'oscillateur (VCO) commandé par la tension, et

p3) le signal de sortie du comparateur de tension (SK) représentant le signal de commande (b).

8. Dispositif suivant la revendication 6 ou 7, caractérisé par le fait que

q) un amplificateur d'entrée (EV) est branché en amont du démodulateur.

9. Dispositif selon l'une des revendications 6 à 8, caractérisé par le fait que le circuit (TR) de récupération de la cadence est conçu de la manière suivante :

r) le discriminateur d'annulations (ND) comporte, comme étage d'entrée, un amplificateur opérationnel, qui est branché en tant que comparateur de tension (SK) et dont la sortie est raccordée d'une part directement à une entrée d'une porte OU-EXCLUSIF (U1) et d'autre part, par l'intermédiaire de trois circuits inverseurs (N1...N3) branchés en série, à une seconde entrée de la porte OU-EXCLUSIF (U1),

s) la sortie inversée de la porte OU-EXCLUSIF (U1) est reliée par l'intermédiaire de la ligne à retard (VL) à une entrée du diviseur de fréquence commutable (FT),

t) le diviseur de fréquence (FT) contient deux bascules bistables de type JK (K1, K2), à l'entrée de cadence desquelles est appliqué respectivement le signal de sortie (c') de la ligne à retard (VL),

u) la sortie inversée du premier étage à bascule (K1) est raccordée à une entrée d'une porte ET (U2), à l'autre entrée de laquelle est appliqué le signal de commande (b), la sortie inversée de la porte ET (U2) étant raccordée à l'entrée (U2) du second étage à bascule (K2),

v) la sortie non inversée du second étage à bascule (K2) constitue la sortie du circuit (TR) de récupération de la cadence, et la sortie inversée est raccordée à l'entrée (J1) du premier étage à bascule (K1),

w) le signal de commande (b) est en outre raccordé directement à une entrée d'une troisième porte OU-EXCLUSIF (U3) et, par l'intermédiaire de quatre circuits inverseurs (N5...N8) branchés en série, à l'autre entrée de cette porte OU-EXCLUSIF (U3), la sortie inversée de la porte OU-EXCLUSIF (U3) étant raccordée respectivement à une entrée de remise à l'état initial des étages à bascule de type JK (K1, K2).

FIG 1

FIG 2

FIG 3

FIG 4